# EUROPEAN PATENT APPLICATION

(11) **EP 3 142 208 A1**
(43) Date of publication of application: **15.03.2017**
(21) Application number: 16159575.6
(22) Date of filing: 10.03.2016
(51) Int. Cl.: H02J 3/00, H02G 1/02

(54) **A PYLON BASED POWER MANAGEMENT SYSTEM**

(30) Priority: 10.03.2015 IE 20150065
(71) Applicant: Grogan, Martin, Dublin (IE)
(72) Inventor: Grogan, Martin, Dublin (IE)
(74) Representative: O'Neill, Brian

(57) **Abstract**

The present invention is concerned with a pylon based power management system which may be retrofitted to one ore more existing electricity pylons, also known as transmission towers or hydro towers, in order to provide the capability to locally utilise electricity being transmitted through the high voltage power lines carried by the pylons, the system comprising at least one transformer, a transducer to convert energy from one form to another, and an electrical connector operable to establish an electrical connection between at least one of the power lines supported by the pylon and the transformer.

## Description

### Field of the invention

The present invention relates to a pylon based power management system which, in a preferred embodiment, may be retrofitted to one ore more existing electricity pylons, also known as transmission towers or hydro towers, in order to provide the capability to locally utilise electricity being transmitted through the high voltage power lines carried by the pylons, thereby availing of existing infrastructure in order to avoid issue such as planning requirements, costs, etc.

### Background of the invention

In most countries electrical energy, for both industrial and residential consumption, is generated and supplied from large scale power plants which are often located large distances from the urban centres which consume the greatest proportion of the generated electricity. It is therefore necessary to transmit the generated electricity long distances, conventionally by means of over ground high voltage power lines which are strung between a network of the above mentioned pylons or transmission towers.

Electricity is normally transmitted at high voltages over long distances, such as from a power station to a remote substation, in order to reduce power losses which occur, with voltages normally in the region of 110kV or higher. Higher voltages mean proportionately lower current, which is responsible for heat losses within the transmission lines.

These power lines feed one ore more electrical substations, from which the electricity is redistributed to the consumers. The primary purpose of the substations is to step down the high voltage electricity transmitted through the power lines to a lower voltage which can then be used by the consumer, otherwise known as mains electricity.

The arrangement of most distribution networks does however give rise to unnecessary losses and inefficiencies. For example, electricity must be transmitted along the network of pylons to a substation, before being stepped down in voltage and transmitted, along another set of power transmission lines, in a direction parallel or in close proximity to the network of high voltage power lines, to consumers located along the path of the high voltage distribution network.

It is therefore an object of the present invention to overcome some of the above mentioned problems of the prior art.

### Summary of the invention

According to a first aspect of the present invention there is provided a pylon based power management system comprising at least one transformer; a transducer to convert energy from one form to another; and an electrical connector operable to establish an electrical connection between a high voltage power line supported by the pylon and the at least one transformer.

Preferably, the transducer comprises a motor generator set.

Preferably, the transducer comprises a renewable energy device.

Preferably, the renewable energy device comprises a wind turbine and/or a hydroelectric device.

Preferably, the wind turbine comprises a vertical axis wind turbine.

Preferably, the at least one transformer comprises a step down transformer.

Preferably, the at least one transformer comprises a step up transformer.

Preferably, the power management system comprises a grid out connection.

Preferably, the power management system comprises a grid in connection.

Preferably, the power management system comprises a fluid augmentor operable to improve fluid flow past the renewable energy device.

Preferably, the fluid augmentor comprises at least one array of louvers.

Preferably, the orientation of the louvers is adjustable.

Preferably, the louvers are automatically adjustable in response to external environmental conditions.

Preferably, the power management system comprises a module housing the components of the system and retrofittable to an existing pylon.

According to a second aspect of the present invention there is provided a method of managing electrical power comprising the steps of; establishing an electrical connection to a high voltage power transmission line, at the location of an electricity pylon carrying the power transmission line; and locally transforming power taken from or supplied to the high voltage power transmission line.

Preferably, the method comprises utilising a renewable energy device to generate electrical power from local environmental resources; transforming the electrical power to a high voltage suitable for transmission by the high voltage power transmission line; and supplying the transformed electrical power to the power transmission line for onward transmission.

Preferably, the method comprises generating electrical power from a wind turbine; and augmenting the local wind flowing past the turbine in order to improve power extraction by the turbine.

Preferably, the method comprises locally drawing electrical power from the power transmission line; stepping down the voltage of the drawn electrical power; and supplying the stepped down electrical power to local consumers.

As used herein, the term "transmission line" is intended to mean any arrangement of electrical conductor(s) operable to transmit high voltage electrical power between locations, whether AC or DC, and most preferably over long distances, and may for example be a collection of parallel conductors such as required for the transmission of three phase AC.

As used herein, the term "transducer" is intended to mean a system or device which is operable to convert energy from one form to another, and may for example be operable to convert mechanical energy or work into electrical energy, or to convert electrical energy from one form to another, for example from a high-voltage to a low voltage, and may for example be in the form of a motor generator set, a wind or water turbine or the like.

### Brief description of the drawings

The present invention will now be described with reference to the accompany accompanying drawings, in which;
Figure 1 illustrates a schematic representation of a prior art electricity pylon or transmission tower;
Figure 2 illustrates a schematic representation of a modified electricity pylon according to an embodiment of the present invention;

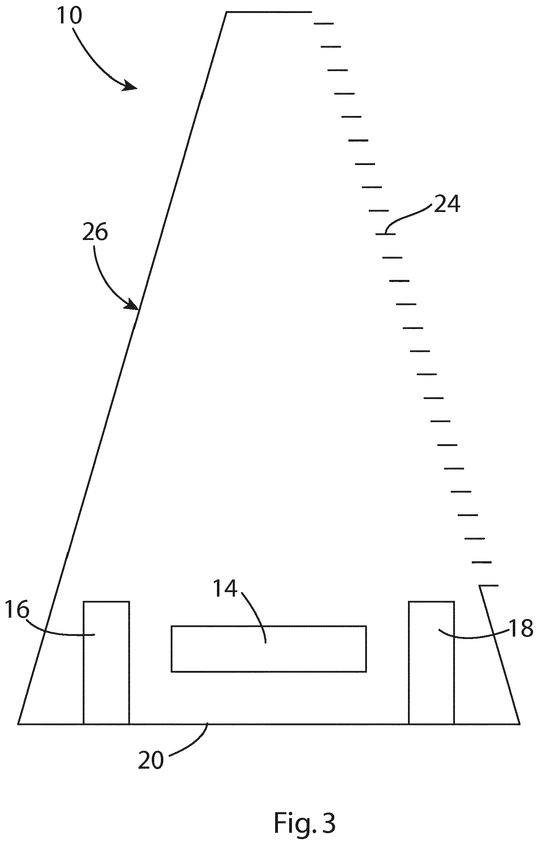

Figure 3 illustrates a schematic representation of a retrofittable modular embodiment of a pylon based power management according the present invention; and
Figure 4 Illustrates a schematic representation of a side face of a modified electricity pylon according to an embodiment of the present.

### Detailed description of the drawings

Referring now to the accompanying drawings there is illustrated a pylon based power management system, generally indicated as 10, for use in locally managing, at the site of an existing or newly installed electricity pylon 12, electrical power drawn from or supplied back to one or more high voltage power transmission lines carried by the pylon 12.

The system and method of the present invention thus allow significant functionality to be realised at sites which conventionally contain simple but large scale support structures for the power lines. Such pylons 12 provide a ready structure within which the power management system 10 of the present invention can be installed, thereby reducing the cost of such an installation, while significantly reducing the administrative burden, for example the requirements surrounding planning permission, grid connection, etc. The power management system 10 of the present invention may also include a renewable energy generator such as a wind turbine or the like, thereby additionally allowing electricity to be generated at the site of the pylon 12, which may be locally consumed or may be fed back into the grid, which can be done directly via the high voltage power transmission lines carried by the pylon 12, again greatly simplifying the grid connection process for such a renewable energy device.

In the preferred embodiment illustrated the power management system 10 comprises a transducer in the form of a wind turbine 14, a step down transformer 16, and a step up transformer 18. The system 10 further comprises a platform 20 which is preferably fitted at a raised elevation within and supported by the existing truss structure of the pylon 12, to provide a base onto which the turbine 14 and transformers 16, 18 can be mounted for operation. By providing the platform 20 at a raised elevation the electrical components located thereon are not accessible from the ground for reasons of security, and in the event of a flood will be safely supported above any flood waters. It will however be understood that any other suitable means may be employed in place of the platform 20 in order to support and secure the various components of the power management system 10 at the site of the pylon 12.

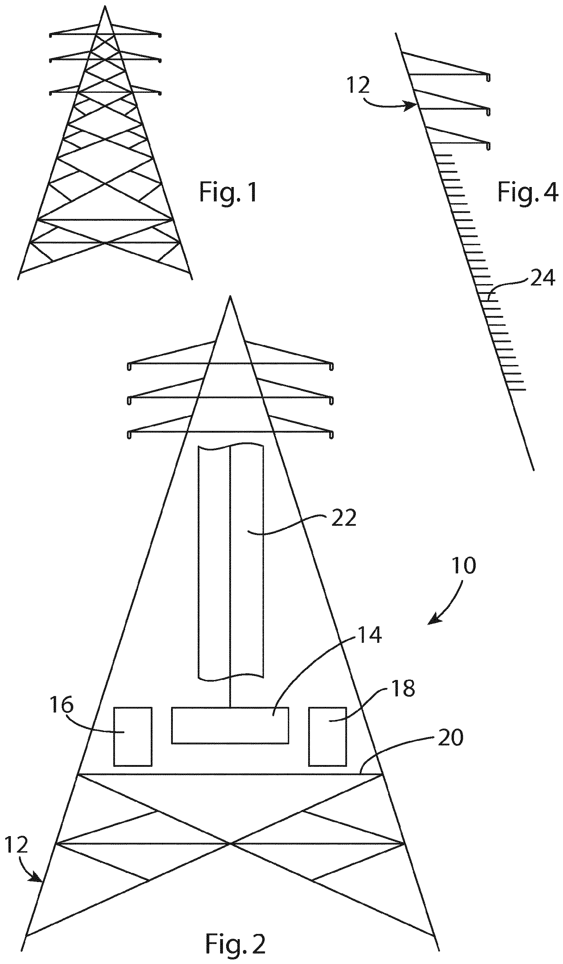

In the preferred embodiment illustrated the turbine 14 comprises a vertical axis rotor 22 which is shaped and dimensioned to be fully housed or contained within the interior space defined by the lattice structure of the pylon 12, as illustrated in Figure 2. The open lattice structure of the pylon 12 allows wind to pass freely through the pylon 12 in order to drive the rotor 22 and thus ultimately generate electricity. It will of course be appreciated that any other suitable arrangement of wind turbine 14 may be employed, and may be modified to suit the design of the pylon in question. For example, one or more horizontal axis rotors (not shown) could be provided, and the blades of the turbine could for example be located outside of the space effectively enclosed by the pylon 12. It will also be appreciated that the turbine 14 could be replaced with any suitable functional alternative. For example if the pylon 12 were located in open water a hydro-electric turbine could be employed, as could a wave power generator or the like.

The power management system 10 may additionally comprise one or more fluid augmenters in the form of an array of louvers 24, provided on at least one but preferably all side faces of the pylon 12, and preferably along the full height of the rotor 22. The louvers 24 serve to augment the air flow flowing passed the rotor 22 in order to increase the power extracted by the turbine 14 from the wind. The orientation of the louvers 24 are preferably mechanically displaceable, incrementally or infinitely, between fully opened and fully closed configurations, and can therefore be trimmed, preferably automatically and by means of a suitable computer controller (not shown) forming part of the power management system 10. The controller is preferably fed with data from one or more environmental sensors (not shown), for example an anemometer, positioned about the pylon 12, in order to efficiently augment the wind passing the rotor 22 regardless of the direction and strength of the wind. Thus for example the louvers 24 on two opposed sides or faces of the pylon 12 may be fully closed, while the louvers 24 on the other pair of opposed sides may be fully or partially opened, thereby channelling the wind through the interior space defined by the pylon 12 and housing the rotor 22, in order to extract significant power from the wind.

The louvers 24 can be automatically and continuously adjusted in order to minimise the yaw angle between the wind direction and the axis of the rotor 22 of the turbine 14, to maximise the power output while minimising the non-symmetrical loading of the turbine 14. Additional functionality may be provided by the louvers 24, whereby one or more faces of the pylon 12 may be closed off by the louvers 24 in order to effectively block the wind flow from reaching the rotor 22 and thus effectively applying a brake thereto, for example during periods of extremely high winds which might otherwise damage the turbine 14 or related electrical systems.

It is however also envisaged that the power management system 10 may be provided without the louvers 24.

In the preferred embodiment illustrated the system 10 is provided as a module defined by a housing 26, consisting of the platform 20 as a base of the module, and the louvers 24 as sidewalls, the housing 26 containing the turbine 14 and transformers 16, 18. This module 26 may then be quickly and easily retro-fitted to an existing pylon 12 in order to minimise installation time and cost. The power management system 10 can however be incorporated into the initial design of the pylon 12 and thus manufactured and installed at the same time as the pylon 12 itself.

Turning then to the operation of the system 10, once the power management system 10 has been fitted to the pylon 12, whether as the retrofitted module 26 or in the original design and manufacture of the pylon 12, an electrical connection is then established between the power transmission lines carried by the pylon 12 and the step down transformer 16, and optionally between the step up transformer 18 and the power lines. The system 10 is also preferably provided with both a grid in and a grid out connection (not shown), thus allowing electrical power to be supplied from the power management system 10 directly to local consumers in the vicinity of the particular pylon 12, and allowing local generators, for example a wind farm or convention power station or the like, to establish a grid connection to facilitate the supply of generated electricity to the grid via one or more of the local pylons 12.

During suitable periods, if forming part of the power management system 10, the louvers 24 are operated to permit wind to flow past the rotor 22 of the turbine 14, thereby generating electricity. This electricity is passed through the step up transformer 18 in order to increase the voltage to a level suitable for transmission by the power lines, and from the transformer 18 the stepped up electrical power is then fed into the transmission lines. Thus the pylon 12 can function as a local power plant feeding electricity into the grid.

Power may also be taken from the high voltage transmission lines via the system 10, and passed through the step down transformer 16 in order to provide electrical power at a voltage and current which may then be consumed locally, for example by local business or residential consumers. A grid out connection (not shown) may be provided after the step down transformer 16 in order to allow the local transmission of electrical power from the power management system 10.

In addition, for example during periods when the turbine 14 is not being used to generate electricity from the wind, the system 10 may be switched over to draw electrical power from the transmission lines, through the step down transformer to be fed to the turbine 14 which can then produce additional power to be fed back into the grid if required. This arrangement could be used to compensate for the average leakage of approximately 20% that occurs across most conventional electrical grids. The system 10 and method of the present invention allow for the leakage to be fed back into the grid in order to boost the transmission capabilities of the grid, which is particularly beneficial where long transmission distances exist. Multiple series instances of the power management system 10 of the invention can thus establish large amounts of localised power management systems, provided in an existing array of the pylons 12.

It will thus be appreciated that the system and method of the present invention provide a means of utilising existing pylons to function both as local power generating plants and effectively local electrical sub-stations via which electricity can be extracted from the grid for localised use or can be fed back into the grid.

## Claims

1. A pylon based power management system comprising at least one transformer; a transducer to convert energy from one form to another; and an electrical connector operable to establish an electrical connection between a high voltage power line supported by the pylon and the at least one transformer.

2. A pylon based power management system according to claim 1 in which the transducer comprises a motor generator set.

3. A pylon based power management system according to claim 1 in which the transducer comprises a renewable energy device.

4. A pylon based power management system according to claim 3 in which the renewable energy device comprises a wind turbine and/or a hydroelectric device.

5. A pylon based power management system according to claim 4 in which the wind turbine comprises a vertical axis wind turbine.

6. A pylon based power management system according to any preceding claim in which the at least one transformer comprises a step down transformer.

7. A pylon based power management system according to any preceding claim in which the at least one transformer comprises a step up transformer.

8. A pylon based power management system according to any preceding claim comprising a grid out connection.

9. A pylon based power management system according to any preceding claim comprising a grid in connection.

10. A pylon based power management system according to claim 3 comprising a fluid augmentor operable to improve fluid flow past the renewable energy device.

11. A pylon based power management system according to claim 10 in which the fluid augmentor comprises at least one array of louvers.

12. A pylon based power management system according to claim 11 in which the orientation of the louvers is adjustable.

13. A pylon based power management system according to claim 12 in which the louvers are automatically adjustable in response to external environmental conditions.

14. A pylon based power management system according to any preceding claim comprising a module housing the components of the system and retrofittable to an existing pylon.

15. A method of managing electrical power comprising the steps of; establishing an electrical connection to a high voltage power transmission line, at the location of an electricity pylon carrying the power transmission line; and locally transforming power taken from or supplied to the high voltage power transmission line.

16. A method of managing electrical power according to claim 15 comprising utilising a renewable energy device to generate electrical power from local environmental resources; transforming the electrical power to a high voltage suitable for transmission by the high voltage power transmission line; and supplying the transformed electrical power to the power transmission line for onward transmission.

17. A method of managing electrical power according to claim 16 comprising generating electrical power from a wind turbine; and augmenting the local wind flowing past the turbine in order to improve power extraction by the turbine.

18. A method of managing electrical power according to any of claims 15 to 17 comprising locally drawing electrical power from the power transmission line; stepping down the voltage of the drawn electrical power; and supplying the stepped down electrical power to local consumers.
